# EUROPEAN PATENT APPLICATION

(11) **EP 3 017 740 A1**
(43) Date of publication of application: **11.05.2016**
(21) Application number: 15193080.7
(22) Date of filing: 04.11.2015
(51) Int. Cl.: A47J 43/07, B01F 15/00

(54) **THIN-WALLED GLASS-LINED BLENDER JARS**

(30) Priority: 10.11.2014 US 201414536726
(71) Applicant: Whirlpool Corporation, Benton Harbor, MI 49022 (US)
(72) Inventor: Drees, Steven C., 21025 Comerio (IT)
(74) Representative: Guerci, Alessandro

(57) **Abstract**

Thin-walled glass-lined blender jars (100), (200), (300) are disclosed. An example thin-walled glass-lined blender jar (100), (200), (300) includes a thin-walled glass liner (102), and a plastic structural shell (116) around the glass liner (102) providing structural support for the glass liner (102). In some embodiments, a rib (132) of a side wall (118) of the plastic shell (116) is positioned in a rib (130) of a side wall (108) of the glass liner (102). In some embodiments, side walls (108), (118) of the glass liner (102) and plastic shell (116) may taper inward from bottom to top retaining the glass liner (102) within the plastic shell (116). In some embodiments, the plastic shell (116) comprises a non-structural member selected for at least one of ornamentation, decoration, and/or aesthetics.

## Description

### FIELD OF THE DISCLOSURE

This disclosure relates generally to blenders, and, more particularly, to thin-walled glass-lined blender jars.

### BACKGROUND

Blender jars are used with blenders to hold items, e.g., food items, that are to be processed by, for example, liquefying, chopping or pureeing. Blender jars include an integral rotating blade, or are removeably coupled to a collar assembly having a rotating blade. The blade is rotated by a motor to which a blender jar is coupled. Typically, a lid is placed on the blender jar to prevent, for example, spattering.

### SUMMARY

Thin-walled glass-lined blender jars are disclosed. An example thin-walled glass-lined blender jar includes a thin-walled glass liner, and a plastic structural shell around the glass liner providing structural support for the glass liner. In some embodiments, a rib of a side wall of the plastic shell is positioned in a rib of a side wall of the glass liner. In some embodiments, side walls of the glass liner and plastic shell may taper inward from bottom to top retaining the glass liner within the plastic shell. In some embodiments, the plastic shell comprises a non-structural member selected for at least one of ornamentation, decoration, and/or aesthetics.

### BRIEF DESCRIPTION OF THE DRAWINGS

FIG. 1 is a cross-sectional view of an example blender jar implemented in accordance with the teachings of this disclosure.
FIG. 2 is a cross-sectional view of another example blender jar implemented in accordance with the teachings of this disclosure.
FIG. 3 is a cross-sectional view of yet another example blender jar implemented in accordance with the teachings of this disclosure.
FIG. 4 is a cross-sectional view of an example rib of the example blender jars of FIGS. 1,2 and 3.

### DETAILED DESCRIPTION

Conventional blender jars are made entirely from glass or entirely from plastic. While conventional glass blender jars do not retain odors and do not scratch easily, they can break and may be limited in size due to manufacturing processes and/or weight, especially for a large capacity blender jar. For example, a glass blender jar having a capacity of greater than 56 oz. may be too heavy for many consumers, which limits glass blender jar capacity. While conventional plastic blender jars can be molded to be lighter, more impact resistant and to provide larger capacities, they tend to retain odors and scratch easily, e.g., with hard items such as frozen food items. Sound is often a concern with conventional blender jars, as sound isolation is traditionally not contemplated for conventional blender jars.

Thin-walled glass-lined blender jars are disclosed herein that overcome at least these problems. The examples disclosed herein have thin-walled glass liners that are, for example, press-fit or molded into a plastic outer structural shell, which provides structural support for the thin-walled glass liner. Example thin-walled glass liners have a thickness similar to that of a coffee maker carafe (e.g., 3 - 4 millimeters (mms)), and/or approximately half the thickness of a conventional glass blender jar (e.g., 6 - 10 mm), depending on, for example, glass material(s) used, and/or plastic shell design. Accordingly, the example blender jars disclosed herein can be approximately half or less than half of the weight of a conventional glass blender jar, which is significant as consumers increasingly desire larger blender jars. In the examples disclosed herein, the thin-walled glass liner provides, among other things, reduced weight, clean-ability, and minimal odor retention, while the plastic outer shell provides structural support to at least partially compensate for the reduced thickness of the glass liner, and provide impact protection, sound isolation and/or additional decorative features. Additionally, an air gap and/or insulation can be provided between the glass liner and the plastic outer shell to deaden sound. Further still, a vacuum could be provided between the glass liner and the plastic outer shell, which would further reduce noise as sound does not travel in a vacuum.

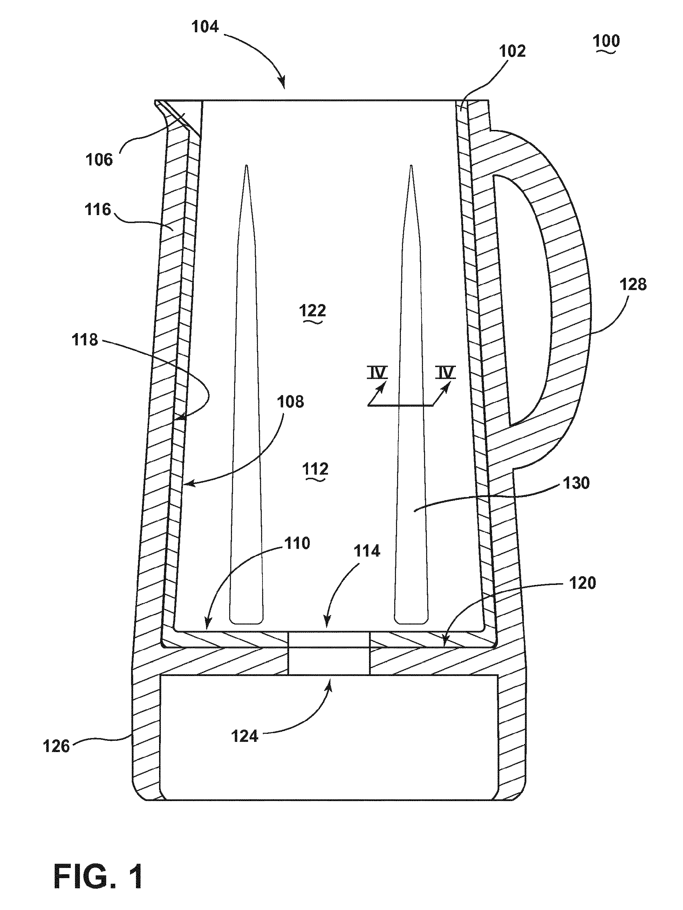

FIG. 1 is a cross-sectional view of an example thin-walled glass-lined blender jar 100 constructed in accordance with the teachings of this disclosure. The example blender jar 100 of FIG. 1 includes a thin-walled glass liner 102 having an upper opening 104 and a molded-in spout 106. The example glass liner 102 includes a side wall 108 and a bottom wall 110 that at least partially define a cavity 112 into which items, such as food items, may be placed for processing (e.g., liquefying, chopping, pureeing, etc.). The bottom wall 110 includes an aperture 114 for receiving a blade assembly (not shown for ease of illustration) within the cavity 112 for processing items.

As shown in FIG. 1, the glass liner 102 is received or positioned within a plastic structural shell 116. The example plastic shell 116 of FIG. 1 provides structural support for the thin-walled glass liner 102. Because the glass liner 102 is thinner than conventional glass blender jars, it has decreased strength and/or rigidity. The structural support provided by the example plastic shell 116 counteracts, overcomes, etc. the structural effects of the glass liner 102 being thinner than is conventional. By providing structural support for the glass liner 102 with plastic, which is substantially lighter than glass, the blender jar 100 of FIG. 1 can be made noticeably lighter than a conventional glass blender jar (e.g., half the weight) while retaining strength and the benefits of glass, such as clean-ability, resistance to stains and scratches, etc.

The plastic shell 116 includes a side wall 118 and a bottom wall 120 that define a cavity 122 in which the glass liner 102 is received, molded or placed. The bottom wall 120 of the plastic shell 116 includes an aperture 124 that opens into the aperture 114 of the glass liner 102 at an upper end, and further opens into a base portion 126 of the plastic shell 116. The base portion 126 is used to couple the blender jar 100 to a blender base for driving the blade assembly within the cavity 112 of the glass liner 102. As shown, the plastic shell 116 includes a handle 128 for engagement by a user.

In the example of FIG. 1, the side wall 108 of the glass liner 102 is tapered inward from the bottom wall 110, as shown. Similarly, the side wall 118 of the plastic shell 116 is tapered inward from the bottom wall 120, as shown, such that the glass liner 102 is closely received within the cavity 122 of the plastic shell 116, and is retained therein due to the tapered shape of the side walls 108, 118.

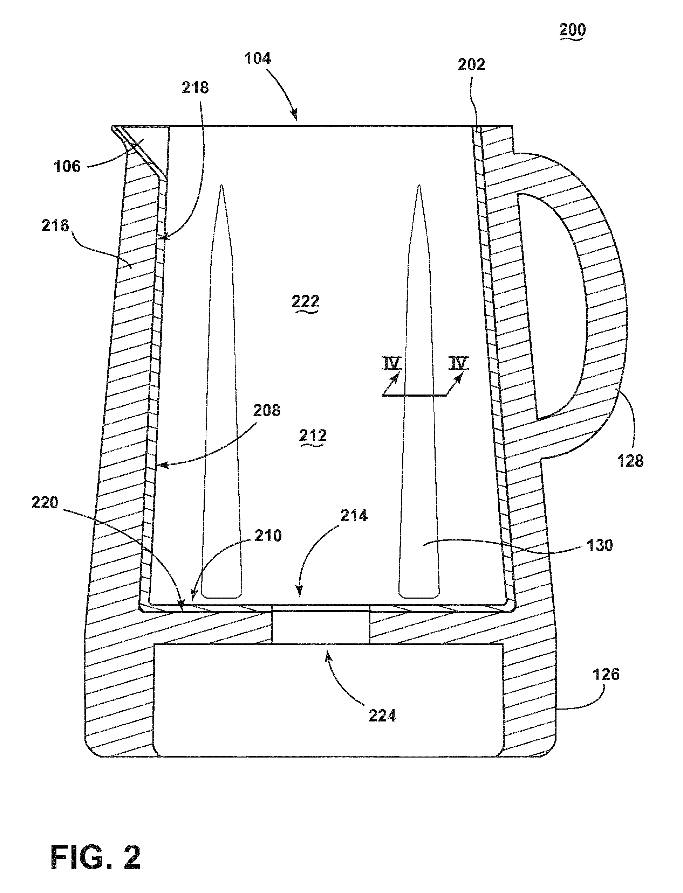

Turning to FIG. 2, another example thin-walled glass-lined blender jar 200 constructed in accordance with the teachings of this disclosure is shown. Identical elements in FIGS. 1 and 2 are designated with identical reference numerals. For brevity, description of identical elements will not be repeated here. Instead, the interested reader is referred to the discussion of the identical elements presented above in connection with FIG. 1.

In contrast to FIG. 1, the example blender jar 200 of FIG. 2 has a glass liner 202 having a straight side wall 208 and a plastic shell 216 having a straight side wall 218. Accordingly, cavities 212 and 222 of, respectively, the glass liner 202 and plastic shell 216 are straight, not tapered. Because the cavities 212, 228 are not tapered, the glass liner 202 is not configuratively retained in the plastic shell 216. Accordingly, in the example of FIG. 2, the glass liner 202 may be configured to be removable by a person, and/or lightly pressed into the cavity 222 of the plastic shell 216 for use therein. In some examples, the side walls 208, 218 are outwardly tapered, which would also provide for user removability and/or insertion.

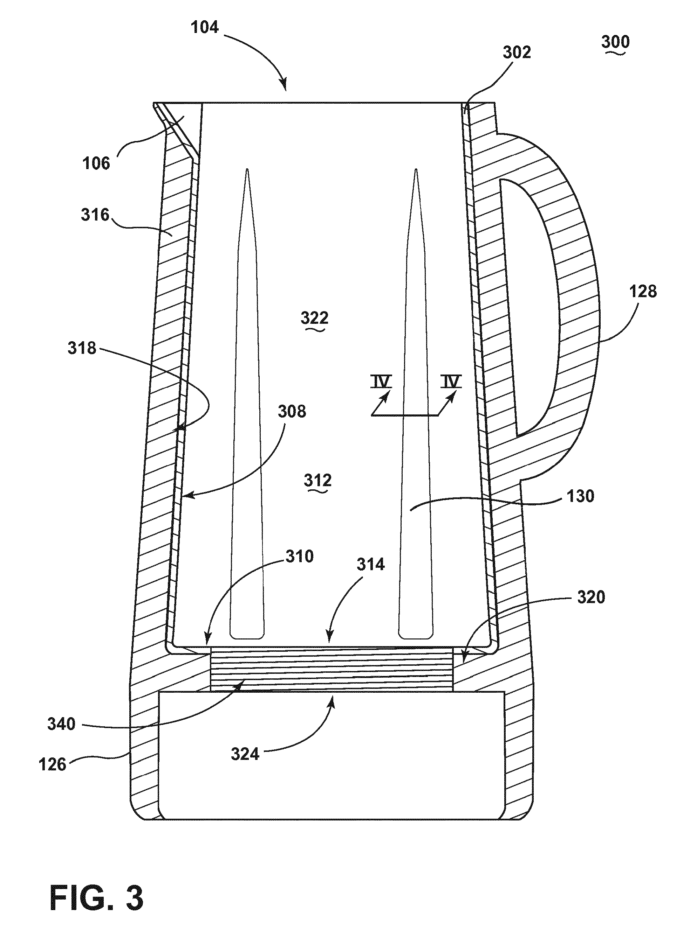

Turning to FIG. 3, another example thin-walled glass-lined blender jar 300 constructed in accordance with the teachings of this disclosure is shown. Identical elements in FIGS. 1, 2 and 3 are designated with identical reference numerals. For brevity, description of identical elements will not be repeated here. Instead, the interested reader is referred to the discussion of the identical elements presented above in connection with FIGS. 1 and 2.

In the example of FIG. 3, a glass liner 302 is threaded into a plastic shell 316. As shown in FIG. 3, bottom openings 314, 324 in, respectively, bottom walls 310, 320 of the glass liner 302 and plastic shell 316 have threads 340 that enable the glass liner 302 to be threaded into the plastic shell 316.

Turning to FIGS. 1, 2 and 3, in general, the plastic shells 116, 216, 316 are made of a material capable of providing structural support for the glass liners 102, 202, 302. In some examples, the plastic shells 116, 216, 316 are formed of rigid impact resistant plastic. The plastic may be at least partially transparent, at least partially transparent in some areas and opaque in others, etc. The plastic may be clear and/or colored. In addition to structural support, impact resistant plastic also serves to deaden reverberating sound when the blender jars 100, 200, 300 are in use. In the example of FIG. 1, it is contemplated that the plastic shell 116 is molded onto the glass liner 102. In the example of FIG. 2, it is contemplated that the glass liner 202 could be press-fit into the glass liner 216.

In some examples, the plastic shell 116, 216, 316 is bonded or sealed to the glass liner 102, 202, 302 to enhance, for example, washability. Additionally, the plastic shell 116, 216, 316 and the glass liner 102, 202, 302 may have an air gap or a vacuum between them to provide additional noise dampening when the blender jar 100, 200, 300 is in use because sound cannot travel through a vacuum.

The glass liners 102, 202, 302 could be made of a borosilicate glass material. However, other materials are contemplated. It is also contemplated that the glass liners 102, 202, 302 may have a thickness between 3 to 4 mm. Of course, other thicknesses are contemplated depending on glass material properties and/or the extent of structural support provided by a plastic outer shell 116, 216, 316.

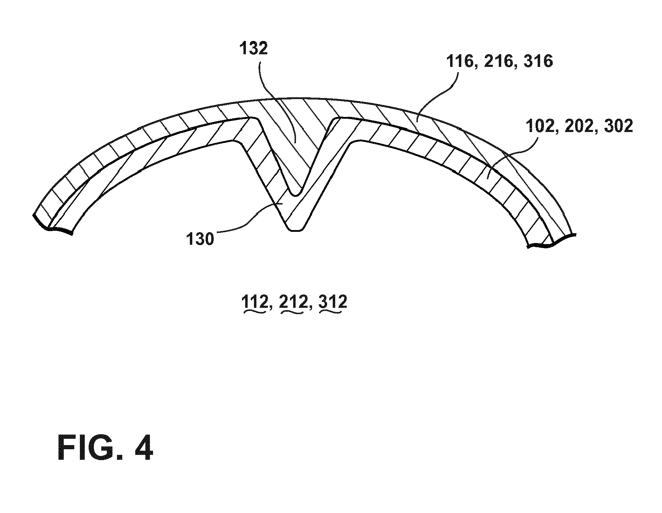

Additionally or alternatively, the plastic shells 116, 216, 316 need not cover all the glass liners 102, 202, 302, but may instead have an arrangement of ribs, members, braces, etc. that provide needed structural support for the glass liners 102, 202, 302. For example, as shown in FIGS. 1, 2 and 3, the blender jar 100, 200, 300 may have ribs, one of which is designated at reference numeral 130. As shown in FIG. 4, which is a cross-sectional view of the rib 130 taken along line IV-IV of FIGS. 1, 2 or 3, the example rib 130 of the glass liner 102, 202, 302 extends inwardly into the cavity 112, 212, 312. The plastic shell 116, 216, 316 may include a rib 132 that extends inward, is dimensioned to generally match the rib 130, and fits into the rib 130 of the glass liner 102, 202, 302 when the glass liner 102, 202, 302 is within the plastic shell 116, 216, 316. Other plastic shell configurations are contemplated, including aspects other than structural support including, but not limited to, ornamental, decorative, aesthetic, etc. reasons.

## Claims

1. A blender jar (100) comprising:
a thin-walled glass liner (102); and
a plastic structural shell (116) around the glass liner (102) providing structural support for the glass liner (102).

2. A blender jar (100) as defined in claim 1, wherein the glass liner (102) has a first side wall (108) and a first bottom wall (110) at least partially defining a first cavity (112) configured to receive items for processing.

3. A blender jar (100) as defined in claim 2, wherein the plastic shell (116) has a second side wall (118) and a second bottom wall (120) at least partially defining a second cavity (122) configured to receive the glass liner (102).

4. A blender jar (100) as defined in claim 3, wherein the first side wall (108) has a first rib (130) at least partially extending into the first cavity (112), and the second side wall (118) has a second rib (132) dimensioned according to the first rib (130), the second rib (132) positioned in the first rib (130) when the glass liner (102) is positioned within the plastic shell (116).

5. A blender jar (100) as defined in claim 3, further comprising:
a first aperture (114) defined through the first bottom wall (110);
a corresponding second aperture (124) defined through the second bottom wall (120); and
a blade assembly mounted to the blender jar (100) through the first (114) and second apertures (124).

6. A blender jar (100) as defined in claim 5, wherein the plastic shell (116) includes a base portion (126) for removeably coupling the blender jar (100) and the blade assembly to a blender base.

7. A blender jar (100) as defined in claim 5, wherein the blade assembly is fixedly mounted to the blender jar (100).

8. A blender jar (100) as defined in claim 2, wherein the first side wall (108) tapers inward from the first bottom wall (110), and the second side wall (118) tapers inward from the second bottom wall (120) corresponding to the first taper, the taper of the second side wall (118) retaining the glass liner (102) within the plastic shell (116).

9. A blender jar (100) as defined in claim 1, wherein the glass liner (102) is press fit into the plastic shell (116).

10. A blender jar (100) as defined in claim 1, wherein the plastic shell (116) is molded onto the glass liner (102) and comprises an impact resistant plastic.

11. A blender jar (100) as defined in claim 1, wherein the plastic shell (116) is bonded to the glass liner (102).

12. A blender jar (100) as defined in claim 1, further comprising at least one of an air gap and a vacuum between at least a portion of the glass liner (102) and the plastic shell (116).

13. A blender jar (100) as defined in claim 1, wherein the plastic shell (116) is sealed to the glass liner (102); wherein the plastic shell (116) only partially covers the glass liner (102); and wherein plastic shell (116) comprises a non-structural member selected for at least one of ornamentation, decoration, and/or aesthetics .

14. A blender jar (100) as defined in claim 1, wherein the glass liner (102) and the plastic shell (116) are removeably assembled such that the glass liner (102) has first threads (340), and the plastic shell (116) has second threads (340), the glass liner (102) threaded into the plastic shell (116) via the first and second threads (340).

15. A blender jar (100) as defined in claim 1, wherein the glass liner (102) comprises a borosilicate glass material, and has a thickness in the range of 3 millimeters (mm) to 4 mm.
